Europäisches Patentamt

European Patent Office

Office européen des brevets

(11) Publication number: **0 076 462**
**B2**

(12) NEW EUROPEAN PATENT SPECIFICATION

(45) Date of publication of the new patent
specification: **16.01.91**

(21) Application number: **82109003.2**

(22) Date of filing: **29.09.82**

(51) Int. Cl.⁵: **H 01 F 1/11, C 01 G 49/02**

(54) **Method of Production of Magnetic Particles.**

(30) Priority: **01.10.81 JP 157135/81**
**01.10.81 JP 157136/81**
**01.10.81 JP 157137/81**
**01.10.81 JP 157138/81**
**01.10.81 JP 157139/81**

(43) Date of publication of application:
**13.04.83 Bulletin 83/15**

(45) Publication of the grant of the patent:
**17.12.86 Bulletin 86/51**

(45) Mention of the opposition decision:
**16.01.91 Bulletin 91/03**

(84) Designated Contracting States:
**DE FR GB NL**

(56) References cited:
**EP-A-0 041 727      DE-A-3 044 772**
**CH-B- 397 617       DE-B-1 160 424**
**DE-A-2 130 921      DE-B-2 130 921**
**DE-A-2 212 934      GB-A-1 589 355**
**DE-A-2 235 383      GB-A-2 060 591**
**DE-A-2 916 403      GB-A-2 063 902**
**DE-A-3 037 346      US-A-3 543 980**
**DE-A-3 038 989      US-A-4 133 677**

(73) Proprietor: **AGENCY OF INDUSTRIAL SCIENCE**
**AND TECHNOLOGY**
**3-1, 1-chome, Kasumigaseki**
**Chiyoda-ku Tokyo (JP)**

(73) Proprietor: **Hitachi Maxell Ltd.**
**No 1-1-88, Ushitora Ibaraki-shi**
**Osaka-fu (JP)**

(72) Inventor: **Nobuoka, Soichiro**
**18-15, Seifuso 1-chome Toyonaka-shi**
**Osaka-fu (JP)**
Inventor: **Asai, Takashi**
**No. 3-10, Niina 7-chome Minoh-shi**
**Osaka-fu (JP)**
Inventor: **Ado, Kazuaki**
**No. 4-8, Satsukigaoka 3-chome Ikeda-shi**
**Osaka-fu (JP)**
Inventor: **Kishimoto, Mikio**
**No. 8-5-305, Toriimae Enmyoji-Oyamazaki**
**Otokuni-gun Kyoto-fu (JP)**
Inventor: **Kitaoka, Susumu**
**No. 644-1, Furukawa-cho Hazukashi Fushimi-ku**
**Kyoto-shi Kyoto-fu (JP)**

(74) Representative: **von Kreisler, Alek, Dipl.-Chem.**
**et al**
**Deichmannhaus am Hauptbahnhof**
**D-5000 Köln 1 (DE)**

**EP 0 076 462 B2**

(56) References cited:

Chemiker-Kalender, Springer-Verlag, pp.75, 77
Gregg, et al. "Adsorption Surface Area and
Porosity", Academic Press, 1967, pp. 27-33

Appl. Physics 15, (1977), pp. 163-167

Bericht der Arbeitsgemeinschaft Magnetismus,
Verlag Stahleisen mbH, Düsseldorf, 1983, Bd. 1,
p.163

## EP 0 076 462 B2

**Description**

The present invention relates to the method of the production of magnetic particles, more particularly, magnetic iron oxide particles, magnetic cobalt-containing iron oxide particles and magnetic iron particles which are useful as a recording element for a magnetic recording medium, and a method for the production thereof.

Various magnetic particles such as $Fe_3O_4$ particles, $\gamma$-$Fe_2O_3$ particles, or intermediates thereof, magnetic cobalt-containing iron oxide particles and magnetic metallic iron particles have widely been used as a recording element for a magnetic recording medium and these magnetic particles are usually produced by reducing $\alpha$-ferric oxyhydroxide ($\alpha$-FeOOH) particles or reducing $\alpha$-FeOOH and then oxidizing it. GB—A—2 063 902 relates to said $\alpha$-ferric oxyhydroxide particles used therein being produced by adding an aqueous alkali solution to an aqueous ferrous salt solution at 30 to 60°C and air-oxidizing the resulting ferrous hydroxide.

However, according to the known method, particles of the ferrous hydroxide grow well to give $\alpha$-ferric oxyhydroxide particles having a large axial ratio, and when this product is reduced with heating or reduced and thereafter oxidized, there are hardly obtainable magnetic iron oxide particles having uniform particle size distribution and having fine particle size while the axial ratio thereof is large.

DE—A—3 038 989 describes a method for the production of stable magnetic iron oxide particles containing a cobalt salt on the surface, wherein the forming of the cobalt layer is carried out by adding an alkaline solution to a suspension containing conventional magnetic iron oxide powder and cobalt ions.

DE—A—2 212 934 discloses a process for obtaining a metal powder substantially consisting of iron, in which $\alpha$-ferric oxyhydroxide powders which are doped with other metals are reduced by molecular hydrogen at the surfaces. The obtained partially reduced iron oxyhydroxide particles are disclosed to be suspended in aqueous solutions containing nickel or cobalt ions.

DE—A—3 037 346 describes the addition of a $FeCl_3$ solution to an alkaline solution. Then, the supernatant solution is separated from the alkaline suspension containing goethit as the main component and the residue is once or several times treated with an alkaline solution to remove by-products of the preceeding reactions.

DE—AS—2 130 921 is directed to cobalt doped iron particles which are prepared by reduction after doping having specific geometric parameters.

DE—B—11 60 424 discloses to add a Fe(III)ion containing solution to an alkali-solution at a temperature between 10 and 50°C, knowing that increase of alkali concentration leads to longer acicular particles and increase of temperature leads to thicker particles.

The aging step can be performed at room temperature (20—90°C) and an autoclaving step is provided.

When the fine $\alpha$-ferric oxyhydroxide particles are prepared by the conventional method, the resulted particles are very thin because of the high axial ratio. Accordingly, when the particles are reduced with heating, it tends to occur sintering, which results in deformation thereof, and hence, there are hardly obtainable the desired magnetic particles having improved magnetic characteristics.

In view of the facts that the particle shape of the $\alpha$-ferric oxyhydroxide particles affects largely on the magnetic characteristics of the magnetic particles, the present inventors have intensively studied on improvement of the preparation method of $\alpha$-ferric oxyhydroxide particles. As a result, it has been found that when an aqueous solution containing a trivalent iron ion is added to an equivalent or more amount of an aqueous alkali solution at a temperature of −2 to 20°C followed by aging the produced ferric hydroxide and subjecting the ferric hydroxide to hydrothermal reaction in an autoclave, there can be obtained $\alpha$-ferric oxyhydroxide particles having a long axis diameter of 300 nm or less, an axial ratio of 5 or less and a specific surface area of 40 $m^2/g$ or less (measured by BET method) which can give magnetic particles having excellent magnetic characteristics by reduction thereof.

An object of the present invention is to provide magnetic particles which are useful as a recording element for a magnetic recording medium. Another object of the invention is to provide magnetic iron oxide particles. A further object of the invention is to provide magnetic cobalt-containing iron oxide particles. A still further object of the invention is to provide magnetic metallic iron particles. A still further object of the invention is to provide a magnetic recording medium prepared by using the magnetic particles as set forth above. A still further object of the invention is to provide $\alpha$-ferric oxyhydroxide particles having a small axial ratio and uniform particle size distribution which can give the desired magnetic particles. Thus, object of the invention is to provide a method for the production of the magnetic particles as set forth above.

According to the method of the presdent invention as referred to in present claim 1, an aqueous solution containing a trivalent iron ion is added to an equivalent or more amount of an aqueous alkali solution to produce ferric hydroxide, wherein the reaction is carried out at a temperature of −2 to 20°C and then the ferric hydroxide is aged. Accordingly, the ferric hydroxide particles are appropriately grown, and such ferric hydroxide particles can give $\alpha$-ferric oxyhydroxide particles having a small axial ratio and uniform particle size distribution by subjecting them to hydrothermal reaction in an autoclave. The $\alpha$-ferric oxyhydroxide particles thus obtained are fine and have a long axis diameter of 300 nm or less, and hence, the magnetic particles obtained therefrom by reduction thereof show excellent magnetic characteristics such as excellent coercive force and also excellent dispersibility to a binder when it is used for the

3

production of magnetic paint compositions, and hence, the magnetic tape prepared therefrom has excellent surface smoothness, lower noise level, and excellent electro-transfer properties. Moreover, owing to the uniform particle distribution, the magnetic particles have excellent distribution of coercive force, and hence, magnetic tape prepared therefrom has excellent orientation property and erasability. The cobalt-containing iron oxide particles produced by the present invention have excellent stability of magnetic properties with temperature and time. Besides, owing to the small specific surface area such as 40 $m^2/g$ or less of the α-ferric oxyhydroxide particles, the metallic iron particles obtained therefrom by reduction thereof show excellent corrosion resistance, too.

In the method of the present invention, when the reaction of the aqueous solution containing a trivalent iron ion with the aqueous alkali solution is carried out at a temperature of −2 to 20°C, it is difficult to control the growth of ferric hydroxide particles, which results in difficulty of production of the desired α-ferric oxyhydroxide fine particles having uniform particle distribution, and hence, the reaction is at a temperature of −2 to 20°C, i.e. in the range of from the freezing point of the solution to 20°C. When the reaction temperature is low, the control of the growth of α-ferric oxyhydroxide particles is more easy, and hence, the reaction temperature is 20°C or lower, particularly in the range of −2°C to 20°C. The aging of ferric hydroxide is carried out at room temperautre for 10 minutes or more, usually for 30 minutes or more, preferably for 3 to 70 hours. When the aging period of time is too short, the growth of ferric hydroxide particles becomes insufficient, and on the other hand, when the aging period of time is too long, the growth of ferric hydroxide particles becomes too excess, which tends to result in difficulty of production of the desired α-ferric oxyhydroxide particles having uniform particle size distribution.

The aqueous solution containing a trivalent iron ion is prepared by dissolving one or more of various water-soluble ferric salts such as ferric chloride, ferric sulfate, ferric nitrate, etc. in water, or dissolving one or more of various water-soluble ferrous salts such as ferrous chloride, ferrous sulfate, ferrous nitrate, etc. in water and then oxidizing it with an oxidizing agent (e.g. hydrogen peroxide, sodium chlorate), wherein the iron salts are contained in the aqueous solution in the form of trivalent iron ion. The iron salts are contained in the aqueous solution in a concentration of 0.5 mole/liter or less, preferably 0.01 to 0.2 mole/liter.

The aqueous alkali solution, to which the aqueous solution containing a trivalent iron ion is added, is an aqueous solution of an alkali metal hydroxide such as sodium hydroxide, potassium hydroxide, etc., and the alkali metal hydroxide is used in an amount equivalent or more to the amount of trivalent iron ion in order to produce advantageously the desired ferric hydroxide particles having a suitable particle size.

The amount of the alkali metal hydroxide is in the range of 3 to 10 moles to 1 mole of the trivalent iron ion. When the concentration of the aqueous alkali solutin is too high, the product becomes ununiform and shows widely spreaded particle size distribution. Accordingly, the concentration of the free alkali is preferably in 1 mole/liter or less, more preferably in the range of 0.1 to 0.8 mole/liter.

The aqueous solution containing 0,5 mole/l of a trivalent iron ion is reacted with an aqueous alkali solution containing an alkali metal hydroxide with 3 to 10 moles alkali to 1 mole of the trivalent iron ion at a temperature of −2 to 20°C to produce ferric hydroxide, followed by aging the ferric hydroxide particles at room temperature, by which there is obtained an aqueous suspensionk of ferric hydroxide particles having an appropriate degree of growth of particles. The suspension is subjected to hydrothermal reaction in an autoclave to give α-ferric oxyhydroxide fine particles having uniform particle size distribution and a small axial ratio.

The hydrothermal reaction in an autoclave for producing α-ferric oxyhydroxide is carried out at a temperature of 120 to 250°C, more preferably 150 to 220°C, since when it is carried out at lower than 120°C, the crystallization required much longer time, and on the other hand, when it is carried out at higher than 250°C, the product is unfavorably contaminated with α-$Fe_2O_3$ particles.

The desired magnetic iron oxide particles are produced from the α-ferric oxyhydroxide particles in the following manner.

The α-ferric oxyhydroxide particles obtained above are washed as usual with water, filtered and then dried. The dried particles are reduced with heating at a temperature of 250 to 400°C, or alternatively are oxidized in air at a temperature of 200°C or higher after reduction, by which there are produced magnetic fine acicular particles of γ-$Fe_2O_3$, $Fe_3O_4$ or intermediates thereof which have a small axial ratio, uniform particle size distribution, improved magnetic characteristics such as large coercive force and large squareness ratio, and further, improved dispersibility and orientation property.

When the reduction is carried out at a temperature of 250°C or higher, the magnetic characteristics of the particles are improved, and with raising the temperature, the reduction is more promoted. However, when the temperature is over 400°C, undesirable sintering occurs to result in lowering of coercive force of the particles. Accordingly, the reduction is preferably carried out at a temperature of 250 to 400°C.

In order to improve more the coercive force of the magnetic iron oxide particles, cobalt is added to the iron oxide particles. Such magnetic cobalt-containing iron oxide particles are produced in the following manner.

The iron oxide particles obtained above are dispersed in an aqueous solution containing a cobalt salt and optionally further a ferrous salt and thereto is added an aqueous alkali solution, and the mixture is reacted, by which the iron oxide containing cobalt ions are formed on the surface region of iron oxide particles. Alternatively, the iron oxide particles are dispersed in an aqueous solution containing a cobalt salt and a complexing agent and then subjected to hydrothermal reaction at 150 to 200°C, by which the cobalt ions are uniformly penetrated within the iron oxide particles. Both methods can give the desired magnetic cobalt-containing iron oxide particles having uniform particle size distribution and having a long axis diameter of 300 nm or less, an axial ratio of 5 or less, a specific surface area of 40 $m^2/g$ or less (measured by BET method), and a coercive force of 23.9 kA/m or more. The magnetic particles produced by the latter method contain uniformly the cobalt atoms within the particles, and hence, they can give a magnetic recording medium having isotropic magnetic components. The magnetic particles produced by the former method contain predominantly the cobalt atoms at the surface region of the particles, and hence, when these particles are heated at a temperature of 300 to 600°C, the cobalt atoms are uniformly diffused within the particles to give the magnetic particles having characteristics similar to the product of the latter method.

The cobalt salt used in the above methods includes cobalt primary sulfate, cobalt primary chloride, cobalt primary nitrate, or the like. The ferrous salt which is optionally added to the solution includes ferrous sulfate, ferrous chloride, ferrous nitrate, or the like. The aqueous alkali solution is preferably an aqueous solution of an alkali metal hydroxide such as sodium hydroxide or potassium hydroxide. The aqueous alkali solution should have a concentration of the alkali metal hydroxide sufficient to precipitate the cobalt hydroxide and ferrous hydroxide. Thus, the aqueous alkali solution has a concentration of an alkali metal hydroxide of 2 to 10 mole to 1 mole of the cobalt and ferrous ions. The reaction temperature is preferably 50°C or lower in order to proceed the reaction uniformity. The complexing agent used in the latter method includes sodium citrate, sodium tartrate, or the like.

The magnetic cobalt-containing iron oxide particles thus produced have a uniform particle size distribution and hence have a narrow coercive force distribution, excellent stability of magnetic properties with temperature and time, excellent electro-transfer property.

According to the present invention, magnetic metallic iron particles are also produced in the following manner.

The α-ferric oxyhydroxide particles obtained above are washed with water, filtered and then dried, and the dried particles are reduced with a reducing gas (e.g. under hydrogen gas stream) at a temperature of 300 to 600°C, by which there are obtained the desired magnetic metallic iron fine particles having uniform particle size distribution and further having a long axis diameter of 300 nm or less, an axial ratio of 5 or less, a specific surface area of 40 $m^2/g$ or less (measured by BET method), and also improved corrosion resistance.

Before subjecting the α-ferric oxyhydroxide particles to reduction with heating, the particles may optionally be treated with a silicone compound (e.g. sodium silicate) or an aluminum compound (e.g. aluminum sulfate) in order to prevent unfavorable sintering or deformation of the α-ferric oxyhydroxide.

A magnetic recording medium is prepared from the magnetic iron oxide particles, magnetic cobalt-containing iron oxide particles or magnetic metallic iron particles obtained above in a usual manner, for example in the following manner.

The magnetic particles are mixed with a binding resin, an organic solvent and any conventional additives to prepare a magnetic paint composition. The magnetic paint composition is applied to a base (e.g. a polyester film) by a conventional means, for example, with a roll coater, and then, the product is dried.

The binding resin includes all conventional binding resins such as vinyl chloride-vinyl acetate copolymer, polyvinylbutyral, polyurethane resins, or nitrocellulose. The organic solvent includes all conventional organic solvents, such as toluene, methyl isobutyl ketone, methyl ethyl ketone, cyclohexanone, tetrahydrofuran, or ethyl acetate, which may be used alone or in combination of two or more thereof.

The magnetic paint composition may optionally contain other additives such as dispersing agents, lubricating agents, polishing agents, antistatic agents, or the like.

The present invention is illustrated by the following Examples, but should not be construed to be limited thereto.

### Example 1

A solution of ferric chloride ($FeCl_3 \cdot 6H_2O$) (10 moles) in water (30 liters) (i.e. an aqueous ferric chloride solution) and a solution of sodium hydroxide (60 moles) in water (60 liters) (i.e. an aqueous sodium hydroxide solution) are prepared. The aqueous ferric chloride solution is added to the aqueous sodium hydroxide solution at 0°C to produce brown precipitates. The mixture is aged at room temperature for 18 hours, and the supernatant liquid is partly removed. The remaining solution is put in an autoclave and subjected to hydrothermal reaction at 180°C for one hour. After the reaction, the produced yellow precipitates are separated and washed with water, filtered and then dried to give α-ferric oxyhydroxide particles, which have a long axis diameter of 120 nm, a short axis diameter of 30 nm, an axial ratio of 4.0, and a specific surface area of 34 $m^2/g$ (measured by BET method).

The α-ferric oxyhydroxide particles (800 g) are spreaded on a quartz board and put within a tubular electric furnace, and then are reduced by passing therethrough hydrogen gas at rate of 5 liters/minute at 300°C to give $Fe_3O_4$ particles, which have a long axis diameter of 120 nm, a short axis diameter of 30 nm, an axial ratio of 4.0, a specific surface area of 32.1 $m^2/g$ (measured by BET method), a coercive force of 21.9 kA/m, and a squareness ratio of 0.4.

5

A part of the magnetic particles obtained above is oxidized by heating at 250°C in air to give $\gamma$-$Fe_2O_3$ particles, which have a long axis diameter of 120 nm, a short axis diameter of 30 nm, an axial ratio of 4.0, a specific surface area of 32.1 m²/g (measured by BET method), a coercive force (Hc) of 19.9 KA/m, and a squareness ratio ($\sigma_r/\sigma_s$) of 0.4.

By using the $\gamma$-$Fe_2O_3$ particles thus obtained, a magnetic paint composition is prepared in the following formulation.

| Ingredients | Parts by weight |
|---|---|
| $\gamma$-$Fe_2O_3$ particles | 80 |
| VAGH (vinyl chloride-vinyl acetate-vinyl alcohol copolymer manufactured by U.C.C. in U.S.A.) | 11 |
| Vandex T-5250 (urethane elastomer, manufactured by Dainippon Ink Co.) | 7 |
| Colonate L (a trifunctional low molecular weight isocyanate compound, manufactured by Nippon Polyurethane Kogyo K.K.) | 2 |
| Cyclohexanone | 60 |
| Toluene | 60 |

The above ingredients are mixed well in a ball mill for 72 hours to give a magnetic paint composition.

The magnetic paint composition is applied to a polyester base film in a thickness of 4 µm (in dry state) and dried. After surface treatment, the film is cut in a fixed width to give a magnetic tape.

## Example 2

In the same manner as described in Example 1 except that the temperature at the step of adding the aqueous ferric chloride solution to the aqueous sodium hydroxide solution is 10°C, there are obtained $\gamma$-$Fe_2O_3$ particles which have a long axis diameter of 200 nm, a short axis diameter of 50 nm, a specific surface area of 25.0 m²/g (measured by BET method), a coercive force (Hc) of 23.9 kA/m, and a squareness ratio ($\sigma_r/\sigma_s$) of 0.45. By using the $\gamma$-$Fe_2O_3$ particles, a magnetic tape is prepared in the same manner as described in Example 1.

## Example 3

In the same manner as described in Example 1 except that the temperature at the step of adding the aqueous ferric chloride solution to the aqueous sodium hydroxide solution is 20°C, there are obtained $\gamma$-$Fe_2O_3$ particles which have a long axis diameter of 240 nm, a short axis diameter of 60 nm, an axial ratio of 4.0, a specific surface area of 25 m²/g (measured by BET method), a coercive force (Hc) of 25.5 kA/m, and a squareness ratio ($\sigma_r/\sigma_s$) of 0.45. By using the $\gamma$-$Fe_2O_3$ particles, a magnetic tape is prepared in the same manner as described in Example 1.

## Example 4

In the same manner as described in Example 1 except that the aqueous ferric chloride solution is a solution of ferric chloride (15 moles) in water (30 liters), and the aqueous sodium hydroxide solution is a solution of sodium hydroxide (60 moles) in water (60 liters), and the aqueous ferric chloride solution is added to the aqueous sodium hydroxide solution at −2°C, there are obtained $\gamma$-$Fe_2O_3$ particles which have a long axis diameter of 100 nm, a short axis diameter of 30 nm, an axial ratio of 3.3, a specific surface are of 33.4 m³/g (measured by BET method), a coercive force (Hc) of 18.3 KA/m, and a squareness ratio ($\sigma_r/\sigma_s$) of 0.4. By using the $\gamma$-$Fe_2O_3$ particles, a magnetic tape is prepared in the same manner as described in Example 1.

## Example 5

In the same manner as described in Example 1 except that the aqueous ferric chloride solution is replaced by an aqueous solution containing a trivalent iron ion which is prepared by dissolving ferrous sulfate ($FeSO_4 \cdot 7H_2O$) (10 moles) in water (30 liters), adding thereto sulfuric acid (250 ml) and further sodium chlorate (200 g) and heating the mixture at 60°C, there are obtained $\alpha$-ferric oxyhydroxide particles which have a long axis diameter of 120 nm, a short axis diameter of 30 nm, an axial ratio of 4.0, and a specific surface area of 35 m²/g (measured by BET method). Likewise, the magnetic magnetite particles ($Fe_3O_4$ particles) and the magnetic maghemite particles ($\gamma$-$Fe_2O_3$ particles) are obtained.

## Reference Example 1

A solution of ferrous sulfate ($FeSO_4 \cdot 7H_2O$) (10 moles) in water (40 liters) (aqueous ferrous sulfate solution) and a solution of sodium hydroxide (70 moles) in water (40 liters) (aqueous sodium hydroxide solution) are prepared. The aqueous sodium hydroxide solution is added to the aqueous ferrous sulfate solution at 25°C to produce pale green precipitates. While heating the suspension at 40°C in a constant temperature water bath, air is blown in the suspension at a rate of 10 liters/minute and the oxidation reaction is continued for 6 hours. The resulting yellow precipitates are separated, washed with water, filtered and then dried to give $\alpha$-ferric oxyhydroxide particles.

The $\alpha$-ferric oxyhydroxide particles are reduced and then oxidized in the same manner as described in Example 1 to give $\gamma$-$Fe_2O_3$ particles which have a long axis diameter of 200 nm, a short axis diameter of 30 nm, an axial ratio of 6.7, a specific surface area of 50 m$^2$/g (measured by BET method), a coercive force (Hc) of 14.3 kA/m, and a squareness ratio ($\sigma_r/\sigma_s$) of 0.3.

By using the γ-Fe$_2$O$_3$ particles, a magnetic tape is prepared in the same manner as described in Example 1.

Reference Example 2

In the same manner as described in Reference Example 1 except that the aqueous sodium hydroxide solution is added to the aqueous ferrous sulfate solution at 25°C to produce pale green precipitates and the suspension is air-oxidized while heating at 50°C in a constant temperature water bath, there are obtained γ-Fe$_2$O$_3$ particles which have a long axis diameter of 280 nm, a short axis diameter of 40 nm, an axial ratio of 7, a specific surface area of 40 m$^2$/g (measured by BET method), a coercive force (Hc) of 18.3 kA/m, and a squareness ratio ($\sigma_r/\sigma_s$) of 0.35. By using the γ-Fe$_2$O$_3$ particles, a magnetic tape is prepared likewise.

As to the magnetic tapes prepared in the above Examples and Reference Examples, the coercive force (Hc), residual magnetic flux density (Br), squareness ratio (Br/Bs), DC$^S$/$_N$ (direct current, a ratio of signal to noise) and AC$^S$/$_N$ (alternating current, a ratio of signal to noise) were measured. The results are shown in Table 1.

TABLE 1

| Ex. No. | Coercive force Hc (kA/m) | Residual magnetic flux density Br (T) | Squareness ratio Br/Bs | DC$^S$/$_N$ (dB) | AC$^S$/$_N$ (dB) |
|---|---|---|---|---|---|
| Ex. 1 | 21.5 | 0.148 | 0.78 | +0.6 | +1.0 |
| „ 2 | 24.7 | 0.155 | 0.80 | 0 | 0 |
| „ 3 | 26.3 | 0.158 | 0.81 | −0.3 | −0.8 |
| „ 4 | 19.9 | 0.146 | 0.76 | +0.8 | +1.2 |
| Ref. Ex. 1 | 15.9 | 0.12 | 0.70 | −0.8 | −1.2 |
| „ 2 | 19.9 | 0.128 | 0.72 | −1.0 | −1.6 |

As is clear from the above results, the magnetic tapes (in Examples 1 to 4) of the present invention showed superior coercive force, residual magnetic flux density and squareness ratio and lower DC$^S$/$_N$ and AC$^S$/$_N$ in comparison with those of the conventional magnetic tapes (Reference Examples 1 and 2), which means that the magnetic recording obtained by the present invention is superior to the conventional magnetic recording medium in terms of dispersibility, orientation property and also surface smoothness with sufficiently low noise.

Example 6

The γ-Fe$_2$O$_3$ particles (800 g) obtained in Example 2 are dispersed in a solution of cobalt sulfate (0.4 mole) and ferrous sulfate (1.2 mole) in water (3 liters), and thereto is added a solution of sodium hydroxide (16 moles) in water (3 liters). The dispersion is heated to 45°C and stirred for 6 hours with keeping this temperature. The resulting magnetic particles are separated, washed well with water to remove the reaction solution, and then dried to give magnetic cobalt-containing iron oxide particles, which have a long axis diameter of 200 nm, a short axis diameter of 50 nm, an axial ratio of 4, a specific surface area of 22.1 m$^2$/g (measured by BET method), a coercive force of 51.7 kA/m, and a cobalt atom content of 2.57% by weight.

By using the magnetic cobalt-containing γ-Fe$_2$O$_3$ particles, a magnetic tape is prepared in the same manner as described in Example 1.

Example 7

The Fe$_3$O$_4$ particles (800 g) obtained in Example 1 are dispersed in a solution of cobalt sulfate (0.4 mole) in water (3 liters) and thereto is added a solution of sodium hydroxide (4 moles) in water (3 liters). The dispersion is heated to 40°C and stirred for 8 hours with keeping this temperature. The resulting magnetic particles are separated, washed well with water to remove the reaction solution, and then dried to give magnetic cobalt-containing iron oxide particles, which have a long axis diameter of 120 nm, a short axis diameter of 30 nm, an axial ratio of 4, a specific surface area of 29.8 m$^2$/g (measured by BET method), a coercive force of 45.7 kA/m, and a cobalt atom content of 2.84% by weight.

By using the cobalt-containing Fe$_3$O$_4$ particles, a magnetic tape is prepared in the same manner as described in Example 1.

## Example 8

In the same manner as described in Example 6 except that the $\gamma$-$Fe_2O_3$ particles obtained in Example 2 are replaced by the $\gamma$-$Fe_2O_3$ particles obtained in Example 1, there are obtained magnetic cobalt-containing iron oxide particles which have a long axis diameter of 140 nm, a short axis diameter of 35 nm, an axial ratio of 4, a specific surface area of 28.2 $m^2$/g (measured by BET method), a coercive force of 50.2 kA/m, and a cobalt atom content of 2.52% by weight.

By using the magnetic cobalt-containing iron oxide particles, a magnetic tape is prepared in the same manner as described in Example 1.

## Example 9

The $\gamma$-$Fe_2O_3$ particles (800 g) obtained in Example 2 are dispersed in a solution of cobalt chloride ($CoCl_2 \cdot 6H_2O$) (0.8 mole) in water (2 liters) and thereto is added an aqueous solution (2 liters) containing sodium citrate (0.3 mole) and sodium tartrate (0.15 mole) as a complexing agent, and the mixture is subjected to hydrothermal reaction at 200°C for 3 hours. After the reaction, the produced cobalt-containing $\gamma$-$Fe_2O_3$ particles are separated by filtration, washed with water, dried, and then oxidized by heating at 200°C for 3 hours in air to give magnetic cobalt-containing iron oxide particles which have a long axis diameter of 200 nm, a short axis diameter of 50 nm, an axial ratio of 4, a specific surface area of 24.5 $m^2$/g (measured by BET method), a coercive force of 65.3 kA/m, a saturated magnetization ($\sigma_s$) of $9.06 \times 10^{-3}$ Wb·m/kg, a squareness ratio ($\sigma_r/\sigma_s$) of 0.78, and a cobalt atom content of 5.90% by weight.

By using the magnetic cobalt-containing $\gamma$-$Fe_2O_3$ particles, a magnetic tape is prepared in the same manner as described in Example 1.

## Example 10

In the same manner as described in Example 9 except that the $\gamma$-$Fe_2O_3$ particles obtained in Example 2 are replaced by the $\gamma$-$Fe_2O_3$ particles obtained in Example 1, there are obtained magnetic cobalt-containing iron oxide particles which have a long axis diameter of 120 nm, a short axis diameter of 30 nm, an axial ratio of 4, a specific surface area of 29.8 $m^2$/g (measured by BET method), a coercive force of 63.5 kA/m, a saturated magnetization ($\sigma_s$) of $8.08 \times 10^{-3}$ Wb·m/kg, a squareness ratio ($\sigma_r/\sigma_s$) of 0.7, and cobalt atom content of 5.78% by weight.

## Reference Example 3

A solution of ferrous sulfate ($FeSO_4 \cdot 7H_2O$) (10 moles) in water (40 liters) (aqueous ferrous sulfate solution) and a solution of sodium hydroxide (70 moles) in water (40 liters) (aqueous sodium hydroxide solution) are prepared. The aqueous sodium hydroxide solution is added to the aqueous ferrous sulfate solution at 25°C to produce pale green precipitates. While heating the suspension at 40°C in a constant temperature water bath, air is blown into the suspension at a rate of 19 liters/minute, and the oxidation reaction is continued for 6 hours. The resulting yellow precipitates are separated, washed with water, filtered, and then dried to give $\alpha$-ferric oxyhydroxide particles.

The $\alpha$-ferric oxyhydroxide particles are reduced with heating and then oxidized to obtain $\gamma$-$Fe_2O_3$ particles in the same manner as described in Example 1.

The $\gamma$-$Fe_2O_3$ particles are subjected to hydrothermal reaction in the same manner as described in Example 9, by which cobalt atoms are uniformly substituted within the iron particles to give magnetic cobalt-containing $\gamma$-$Fe_2O_3$ particles which have a long axis diameter of 200 nm, a short axis diameter of 30 nm, an axial ratio of 6.7, a specific surface area of 47.9 $m^2$/g (measured by BET method), a coercive force of 51.7 kA/m, and cobalt atom content of 5.89% by weight.

By using the magnetic cobalt-containing $\gamma$-$Fe_2O_3$ particles, a magnetic tape is prepared in the same manner as described in Example 1.

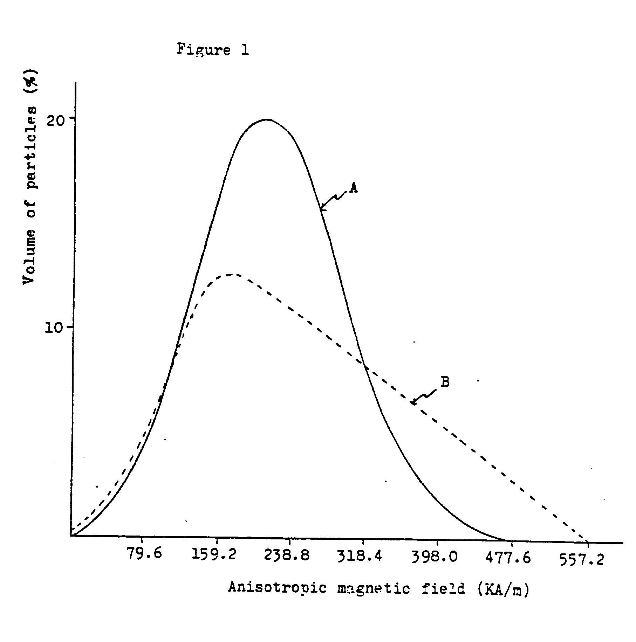

In order to study the coercive force distribution of the magnetic cobalt-containing iron oxide particles obtained in Example 6 and Reference Example 3, the distribution of the anisotropic magnetic field was measured by using a vibrating magnetometer. The results are shown in the accompanying Figure 1, wherein the graph A shows the distribution of the anisotropic magnetic field of the magnetic particles obtained in Example 6, and the graph B shows the distribution of the anisotropic magnetic field of the magnetic particles obtained in Reference Example 3. As is clear from the graphs, the magnetic cobalt-containing iron oxide particles of the present invention have narrower distribution of the anisotropic magnetic field than that of the product in Reference Example, which means that the magnetic cobalt-containing iron oxide particles of the present invention has excellent coercive force distribution.

Besides, in order to study the stability of magnetic properties of the cobalt-containing iron oxide particles obtained in Examples 6 to 10 and Reference Example 3, the demagnetization by heating was measured and then the print-through was tested.

The demagnetization by heating was measured as follows.

The magnetic particles to be tested were packed in a vessel (diameter: 6 mm, height: 3 mm) and were saturatedly magnetized in a magnetic field of 796 KA/m at room temperature, and then, the saturated remanent magnetization (Irs) was measured. Thereafter, the saturatedly magnetized particles were kept at 60°C for 2 hours and taken out at room temperature, and then the remanent magnetization (Ir) was measured. Based on the data thus obtained, the demagnetization by heating was calculated by the following formula:

$$\text{Demagnetization by heating } (\%)=\frac{\text{Isr}-\text{Ir}}{\text{Isr}}\times 100$$

The print-through was tested as follows:

The magnetic particles to be tested were packed in a vessel (diameter: 6 mm, height: 3 mm) and kept in a magnetic field of 3.2 KA/m at 60°C for one hour, and then, the remanent magnetization ($\text{Ir}_{3.2}$) was measured at room temperature, and thereafter, the particles were saturatedly magnetized in a magnetic field of 796 KA/m, and then, the saturated remanent magnetization (Irs) was measured. Based on the data thus obtained, the print-through was calculated in decibel by the following formula:

$$\text{Print-through } (\text{dB})=-20_{\log}\frac{\text{Ir}_{3.2}}{\text{Irs}}$$

The results are shown in the following Table 2.

TABLE 2

|  | Ex. 6 | Ex. 7 | Ex. 8 | Ex. 9 | Ex. 10 | Ref. Ex. 3 |
|---|---|---|---|---|---|---|
| Demagnetization by heating (%) | 0.2 | 0.4 | 0.2 | 2.2 | 2.4 | 5.2 |
| Print-through (dB) | 57.1 | 55.2 | 56.8 | 51.0 | 50.3 | 44.6 |

As is clear from the above table, the magnetic cobalt-containing iron oxide particles of the present invention (in Examples 6 to 10) have all less demagnetization by heating and less print-through in comparison with those of the conventional magnetic cobalt-containing iron oxide particles (Reference Example 3), which means that the magnetic cobalt-containing iron oxide particles of the present invention have excellent heat stability.

Moreover, as to the magnetic tapes obtained in Examples 6 to 10 and Reference Example 3, the coercive force (Hc), residual magnetic flux density (Br), squareness ratio (Br/Bs), $DC^S/_N$, and $AC^S/_N$ were measured, and further erasability was tested. The erasability was tested as follows:

A signal of 1 kHz was recorded on the magnetic tape to be tested at an input of +5 dB, and it was erased with an erasing current of 20% larger than the erasing current which could make the erasability of a standard magnetic tape (BASF C401R) to be 0.5 dB, and then the difference between the regenerated output signal before and after the erasing was calculated, which was shown by "dB".

The results are shown in Table 3.

TABLE 3

| Ex. No. | Coercive force Hc (KA/m) | Residual magnetic flux density Br (T) | Squareness ratio Br/Bs | $DC^S/_N$ (dB) | $AC^S/_N$ (dB) | eras-ability (dB) |
|---|---|---|---|---|---|---|
| Ex. 6 | 54.9 | 0.175 | 0.80 | 0 | 0 | 75.1 |
| „ 7 | 47.1 | 0.180 | 0.80 | +0.2 | +0.2 | 72.0 |
| „ 8 | 53.3 | 0.173 | 0.80 | +0.3 | +0.3 | 71.2 |
| „ 9 | 68.5 | 0.165 | 0.82 | 0 | 0 | 63.0 |
| „ 10 | 67.2 | 0.160 | 0.81 | +0.1 | +0.1 | 61.8 |
| Ref. Ex. 3 | 58.1 | 0.120 | 0.70 | −1.1 | −1.8 | 54.0 |

As is clear from the above table, the magnetic tapes prepared from the magnetic cobalt-containing iron oxide particles of the present invention (Examples 6 to 10) show higher coercive force, residual magnetic flux density and squareness ratio, and lower $DC^S/_N$ and $AC^S/_N$ and superior erasability in comparison with the conventional magnetic tape (Reference Example 3), which means that the magnetic recording medium prepared from the magnetic cobalt-containing iron oxide particles of the present invention have excellent magnetic characteristics and improved erasability with less noise.

## Example 11

The α-ferric oxyhydroxide particles (800 g) obtained in Example 6 are dispersed in water (40 liters), and thereto are added an aqueous solution (10 liters) of sodium hydroxide (concentration: 1 mole/liter) and an aqueous solution (1.3 liter) of sodium orthosilicate (concentration: 1 mole/liter), and the mixture is neutralized until pH 8 or less by blowing carbon dioxide with stirring, by which silicic acid sol is deposited on the surface of particles. The particles are separated, washed with water and dried to give α-ferric oxyhydroxide particles which are coated with the silicate compound.

The α-ferric oxyhydroxide particles coated with a silicate compound on the surface thereof (800 g) are spreaded on a quartz board and put in a tubular electric furnace, and then are reduced by passing therethrough hydrogen gas at a rate of 20 liters/minute at 450°C to give magnetic metallic iron particles, which have a long axis diameter of 180 nm, a short axis diameter of 50 nm, an axial ratio of 3.6, and a specific surface area of 28 m$^2$/g (measured by BET method).

By using the magnetic metallic iron particles, a magnetic tape is prepared in the same manner as described in Example 1.

## Example 12

In the same manner as described in Example 11 except that the coating treatment of a silicate compound onto the α-ferric oxyhydroxide particles is omitted, there are obtained magnetic metallic iron particles which have a long axis diameter of 150 nm, a short axis diameter of 50 nm, an axial ratio of 3, and a specific surface area of 25 m$^2$/g (measured by BET method).

By using the magnetic metallic iron particles, a magnetic tape is prepared in the same manner as described in Example 1.

## Reference Example 4

A solution of ferrous sulfate ($FeSO_4.7H_2O$) (10 moles) in water (40 liters) (an aqueous ferrous sulfate solution) and a solution of sodium hydroxide (70 moles) in water (40 liters) (an aqueous sodium hydroxide solution) are prepared, and the aqueous sodium hydroxide solution is added to the aqeuous ferrous sulfate solution at 25°C to obtain pale green precipitates. While heating the suspension at 50°C in a constant temperature water bath, air is blown in the suspension at a rate of 10 liters/minute and the oxidation reaction is continued for 6 hours. The resulting yellow precipitates are separated, washed with water, filtered and then dried to give α-ferric oxyhydroxide particles which have a long axis diameter of 270 nm, a short axis diameter of 30 nm, an axial ratio of 9, and a specific surface area of 48 m$^2$/g (measured by BET method).

The α-ferric oxyhydroxide particles thus obtained are subjected to the coating treatment with a silicate compound in the same manner as described in Example 11, and further reduced with heating likewise to give magnetic metallic iron particles which have a long axis diameter of 270 nm, a short axis diameter of 30 nm, an axial ratio of 9, and specific surface area of 45 m$^2$/g (measured by BET method).

By using the magnetic metallic iron particles, a magnetic tape is prepared in the same manner as described in Example 1.

As to the magnetic metallic iron particles obtained in Examples 11 and 12 and Reference Example 4, the corrosion resistance was tested in the following manner.

The magnetic metallic iron particles to be tested were allowed to stand at 60°C and 90% RH (relative humidity), and the saturated magnetization was measured at a fixed time interval. The obtained values are shown by the ratio (lowering ratio) to the saturated magnetization of the magnetic metallic iron particles before test (as 100%).

The results are shown in Table 4.

TABLE 4

| Ex. No. | Corrosion resistance (saturated magnetization, %) | | | |
|---|---|---|---|---|
| | After 3 days | 10 days | 20 days | 60 days |
| Ex. 11 | 3.0 | 6.0 | 7.8 | 10.2 |
| „ 12 | 2.5 | 4.9 | 6.4 | 8.4 |
| Ref. Ex. 4 | 7.1 | 14.0 | 18.5 | 24.2 |

As is clear from the above table, the magnetic metallic iron particles of the present invention (Examples 11 and 12) show less lowering of saturated magnetization in comparison with the conventional magnetic metallic iron particles (Reference Example 4), which means that the magnetic metallic iron particles of the present invention have excellent corrosion resistance.

Besides, as to the magnetic tapes prepared in Examples 11 and 12 and Reference Example 4, the coercive force (Hc), residual magnetic flux density (Br), squareness ratio (Br/Bs), $DC^S/_N$ and $AC^S/_N$ were measured, and further the corrosion resistance was tested. The corrosion resistance was tested in the following manner:

The magnetic tapes to be tested were allowed to stand at 60°C and 90% RH, and the maximum magnetic flux density was measured at a fixed time interval. The obtained values are shown by the ratio (lowering ratio) to the maximum magnetic flux density of the magnetic tapes before test (as 100%).

The results are shown in Table 5.

TABLE 5

| Ex. No. | Coercive force Hc (KA/m) | Residual magnetic flux density Br (T) | Squareness ratio (Br/Bs) | $DC^{s}/_{N}$ (dB) | $AC^{s}/_{N}$ (dB) | Corrosion resistance (maximum magnetic flux density, %) | | | |
|---|---|---|---|---|---|---|---|---|---|
| | | | | | | After 3 days | 10 days | 20 days | 60 days |
| Ex. 11 | 96.3 | 0.292 | 0.76 | +0.8 | +1.2 | 1.2 | 2.4 | 3.1 | 4.0 |
| " 12 | 86.8 | 0.269 | 0.71 | 0 | 0 | 1.0 | 1.9 | 2.5 | 3.3 |
| Ref. Ex. 4 | 109.8 | 0.244 | 0.64 | −1.2 | −1.8 | 2.8 | 5.6 | 7.5 | 9.8 |

As is clear from the above table, the magnetic tapes prepared from the magnetic metallic iron particles produced by the present invention (Examples 11 and 12) show higher residual magnetic flux density and squareness ratio, lower $DC^S/_N$ and $AC^S/_N$, and smaller lowering ratio of maximum magnetic flux density in corrosion resistance test in comparison with the conventional magnetic tape (Reference Example 4), which means that the magnetic recording medium prepared from the magnetic metallic iron particles produced by the present invention have excellent magnetic characteristic and further excellent corrosion resistance.

**Claims**

1. Method for the production of magnetic particles of metallic iron or iron oxide which have a long axis diameter of 300 nm or less, an axial ratio of 5 or less and a specific surface area of 40 m²/g or less (measured by BET method), characterized by mixing aqueous solutions of iron (III) salts and aqueous alkaline solutions by

(a) adding an aqueous solution containing 0.5 mole/l or less of a trivalent iron ion to an equivalent or more amount of an aqueous alkali solution containing 3 to 10 moles alkali to 1 mole of the trivalent iron ion at a temperature of −2 to 20°C to cause reaction therebetween to produce ferric hydroxide;

(b) aging the produced ferric hydroxide at room temperature,

(c) subjecting the thus aged ferric hydroxide to hydrothermal reaction in an autoclave at a temperature of 120 to 250°C to produce α-ferric oxyhydroxide particles,

(d) removing impurities and separating the precipitated particles from the reaction medium by

(e) filtering and drying the particles, and then

(f) reducing the particles with heating, optionally in a reducing gas atmosphere.

2. Method according to claim 1 wherein the magnetic iron oxide particles have a layer containing predominantly cobalt ions on the surface region of the particles and have a coercive force of 23.9 kA/m or more.

3. Method according to claim 1, wherein the magnetic iron oxide particles are penetrated by cobalt atoms and have a coercive force of 39.8 kA/m or more.

4. Method according to claims 1 to 3, wherein the step of reducing consists of heating the particles at a temperature of 250 to 400°C.

5. Method according to claims 1 to 4, which further comprises the step of oxidizing the particles obtained from the reducing step in air at a temperature of 200°C or higher to obtain magnetic particles of $Fe_3O_4$, $\gamma$-$Fe_2O_3$ or intermediates thereof.

6. Method according to claims 4 and 5, wherein the resulting iron oxide particles are dispersed in another aqueous solution containing a cobalt salt and thereto is added another aqueous alkali solution and thereby a layer containing predominantly cobalt ions is formed on the surface region of the particles.

7. Method according to claim 6, wherein the another aqueous solution further contains ferrous ions.

8. Method according to claim 4, wherein the resulting iron oxide particles are dispersed in another aqueous solution containing a cobalt salt and the dispersion is subjected to hydrothermal reaction at 150 to 200°C and thereby cobalt ions are penetrated within the particles.

9. Method according to claims 1 to 3, wherein the step of reducing consists of heating the particles at a temperaturre of 300 to 600°C with a reducing gas.

10. Method according to claim 9, wherein the α-ferric oxyhydroxide particles are coated with a silicate compound or an aluminum compound before the reduction thereof.

11. Use of the magnetic particles according to any one of claims 1 to 10, for preparing a magnetic recording medium.

**Patentansprüche**

1. Verfahren zur Herstellung magnetischer Teilchen aus metallischem Eisen oder Eisenoxid, die einen Längsachsen-Durchmesser von 300 nm oder weniger, ein Achsen-Verhältnis von 5 oder kleiner und eine spezifische Oberfläche von 40 m²/g oder weniger (gemessen nach der BET-Methode) haben, gekennzeichnet durch Vermischen wäßriger Lösungen von Eisen(III)-Salzen und wäßrigen alkalischen Lösungen durch

(a) Hinzufügen einer 0,5 mol/l oder weniger dreiwertige Eisen-Ionen enthaltenden wäßrigen Lösung zu einer äquivalenten oder größeren Menge einer wäßrigen Alkali-Lösung, die 3 bis 10 mol Alkali auf 1 mol des dreiwertigen Eisens enthält, bei einer Temperatur von −2°C bis 20°C zur Herbeiführung einer Eisen(III)-hydroxid erzeugenden Reaktion,

(b) Altern des erzeugten Eisen(III)-hydroxids bei Raumtemperatur,

(c) Einwirkenlassen einer hydrothermalen Reaktion auf das derart gealterte Eisen(III)-hydroxid in einem Autoklaven bei einer Temperatur von 120°C bis 250°C zur Bildung von α-Eisen(III)-oxidhydroxid-Teilchen,

(d) Entfernen von Verunreinigungen und Abtrennen der abgeschiedenen Teilchen von dem Reaktionsmedium durch

(e) Filtrieren und Trocknen der Teilchen und danach

(f) Reduzieren der Teilchen unter Erhitzen, gegebenenfalls in der Atmosphäre eines reduzierenden Gases.

13

2. Verfahren nach Anspruch 1, worin die magnetischen Eisen-oxid-Teilchen eine Schicht, die überwiegend Cobalt-Ionen enthält, auf dem Oberflächen-Gebiet der Teilchen aufweisen und eine Koerzitivkraft von 23,9 kA/m oder mehr haben.

3. Verfahren nach Anspruch 1, worin die magnetischen Eisen-oxid-Teilchen von Cobalt-Atomen durchdrungen sind und eine Koerzitivkraft von 39,8 kA/m oder mehr haben.

4. Verfahren nach den Ansprüchen 1 bis 3, dadurch gekennzeichnet, daß der Schritt des Reduzierens aus dem Erhitzen der Teilchen auf eine Temperatur von 250°C bis 400°C besteht.

5. Verfahren nach den Ansprüchen 1 bis 4, dadurch gekennzeichnet, daß es weiterhin den Schritt des Oxidierens der in dem reduzierenden Schritt erhaltenen Teilchen in Luft bei einer Temperatur von 200°C oder darüber zur Gewinnung magnetischer Teilchen von $Fe_3O_4$, $\gamma$-$Fe_2O_3$ oder deren Zwischenprodukten umfaßt.

6. Verfahren nach den Ansprüchen 4 und 5, dadurch gekennzeichnet, daß die resultierenden Eisenoxid-Teilchen in einer anderen, ein Cobalt-Salz enthaltenden wäßrigen Lösung dispergiert werden und dazu eine andere wäßrige Alkali-Lösung gegeben wird und dadurch eine überwiegend Cobalt-ionen enthaltende Schicht auf dem Oberflächen-Gebiet der Teilchen gebildet wird.

7. Verfahren nach Anspruch 6, dadurch gekennzeichnet, daß die andere wäßrige Lösung weiter Eisen-Ionen enthält.

8. Verfahren nach Anspruch 4, dadurch gekennzeichnet, daß die resulierenden Eisenoxid-Teilchen in einer anderen, ein Cobalt-Salz enthaltenden wäßrigen Lösung dispergiert werden und die Dispersion einer hydrothermalen Reaktion bei 150°C bis 200°C unterworfen wird und dadurch Cobalt-Ionen zum Eindrigen in die Teilchen veranlaßt werden.

9. Verfahren nach den Ansprüchen 1 bis 3, dadurch gekennzeichnet, daß der Schritt des Reduzierens aus dem Erhitzen der Teilchen mit einem reduzierenden Gas auf eine Temperatur von 300°C bis 600°C besteht.

10. Verfahren nach Anspruch 9, dadurch gekennzeichnet, daß die $\alpha$-Eisen(III)-oxidhydroxid-Teilchen vor ihrer Reduktion mit einer Silicat-Verbindung oder einer Aluminium-Verbindung beschichtet werden.

11. Verwendung der magnetischen Teilchen nach irgendeinem der Ansprüche 1 bis 10 zur Herstellung eines magnetischen Aufzeichnungsmediums.

**Revendications**

1. Procédé pour la production de particules magnétiques de fer métallique ou d'oxyde de fer ayant un diamètre de grand axe de 300 nm ou moins, un rapport des axes de 5 ou moins et une surface spécifique (mesurée par la méthode BET) de 40 $m^2$/g ou moins, caractérisé par le mélange de solutions aqueuses de sels de fer (III) et de solutions alcalines aqueuses par

(a) addition d'une solution aqueuse contenant des ions de fer trivalent à une quantité équivalente ou plus d'une solution aqueuse d'alcali contenant 3 à 10 moles d'alcali par mole d'ion der fer trivalent, à une température de −2 à 20°C pour provoquer la réaction entre les solutions pour produire de l'hydroxyde ferrique;

(b) mûrissage de l'hydroxyde ferrique produit à la température ambiante,

(c) réaction hydrothermique de l'hydroxyde ferrique ainsi mûri dans un autoclave à une température de 120 à 250°C pour produire des particules d'oxyhydroxyde ferrique, $\alpha$,

(d) élimination des impuretés et séparation des particules précipitées du milieu de réaction par

(e) filtration et séchage des particules, et ensuite

(f) réduction des particules par chauffage, facultativement en atmosphère de gaz réducteur.

2. Procédé selon la revendication 1, dans lequel les particules magnétiques d'oxyde de fer ont dans la région superficielle des particules une couche contenant principalement des ions cobalt et ont une force coercitive de 23,9 kA/m ou plus.

3. Procédé selon la revendication 1, dans lequel les particules magnétiques d'oxyde de fer sont pénétrées par des atomes de cobalt et ont une force coercitive de 39,8 kA/m ou plus.

4. Procédé selon les revendications 1 à 3, dans lequel l'étape de réduction consiste à chauffer les particules à une température de 250 à 400°C.

5. Procédé selon les revendications 1 à 4, qui comprend en outre l'étape d'oxydation à l'air à une température de 200°C ou plus des particules obtenues dans l'étape de réduction pour obtenir des particules magnétiques de $Fe_3O_4$, $Fe_2O_3$ $\gamma$ ou leurs intermédiaires.

6. Procédé selon les revendications 4 et 5, dans lequel les particules d'oxyde de fer résultantes sont dispersées dans une autre solution aqueuse contenant un sel de cobalt et on y ajoute une autre solution aqueuse d'alcali et on forme ainsi sur la région superficielle des particules une couche contenant principalement des ions cobalt.

7. Procédé selon la revendication 6, dans lequel l'autre solution aqueuse contient en outre des ions ferreux.

8. Procédé selon la revendication 4, dans lequel les particules d'oxyde de fer résultantes sont dispersées dans une autre solution aqueuse contenant un sel de cobalt et la dispersion est soumise à une réaction hydrothermique à 150—200°C et les ions cobalt pénètrent ainsi à l'intérieur des particules.

9. Procédé selon les revendications 1 à 3, dans lequel l'étape de réduction consiste à chauffer les particules à une température de 300 à 600°C avec un gaz réducteur.

10. Procédé selon la revendication 9, dans lequel les particules d'oxyhydroxyde ferrique α sont revêtues par un composé silicate ou un composé d'aluminium avant leur réduction.

11. Utilisation des particules magnétiques selon l'une quelconque des revendications 1 à 10 pour préparer un support d'enregistrement magnétique.

Figure 1